# EUROPÄISCHE PATENTANMELDUNG

(11) **EP 4 837 682 A1**
(43) Veröffentlichungstag der Anmeldung: **11.11.2026**
(21) Anmeldenummer: 25175162.4
(22) Anmeldetag: 08.05.2025
(51) Int. Cl.: B23D 63/00, B23D 63/12

(54) **PROFILSCHLEIFMASCHINE UND VERFAHREN ZUM SCHLEIFEN EINES BANDSÄGEBLATTES**

(71) Anmelder: Kohlbacher GmbH, 83483 Bischofswiesen (DE)
(72) Erfinder: Kohlbacher, Siegfried, 83483 Bischofswiesen (DE)
(74) Vertreter: Naessens, Stephan

(57) **Zusammenfassung**

Es wird eine Profilschleifmaschine (1) mit einem an einem Gehäuserahmen (2) verstellbar gelagerten Schleifkopf (3) mit einer rotierenden Schleifscheibe zum Schleifen eines eingespannten Bandsägeblattes (4) vorgeschlagen, wobei der Schleifkopf (3) derart mit einem Vorschubelement (8) in Wirkverbindung steht, dass eine Bewegung des Schleifkopfes (3) in Vorschubrichtung zum Vorschub des Bandsägeblattes (4) vorgesehen ist. Ferner wird ein Verfahren zum Schleifen eines Bandsägeblattes (4) vorgeschlagen, bei dem Sägezähne des Bandsägeblattes nacheinander durch einen Schleifkopf (3) einer Profilschleifmaschine (1) geschliffen werden, wobei das Bandsägeblatt (4) durch eine Bewegung des Schleifkopfes (3) in Vorschubrichtung zum Positionieren eines nächsten zu schleifenden Sägezahnes vorgeschoben wird.

## Beschreibung

Die vorliegende Erfindung betrifft eine Profilschleifmaschine mit einem an einem Gehäuserahmen verstellbar gelagerten Schleifkopf mit einer rotierenden Schleifscheibe zum Schleifen eines eingespannten Bandsägeblattes. Ferner betrifft die Erfindung ein Verfahren zum Schleifen eines Bandsägeblattes, bei dem Sägezähne des Bandsägeblattes nacheinander durch einen Schleifkopf einer Profilschleifmaschine geschliffen werden.

Automatische Profilschleifmaschinen für Bandsägeblätter sind allgemein bekannt. Derartige Profilschleifmaschinen umfassen jeweils einen in verschiedene Richtungen bewegbaren Schleifkopf mit einer rotierenden Schleifscheibe, mit der die Sägezähne eines eingespannten Bandsägeblattes nacheinander automatisch geschliffen werden. Hierzu ist es erforderlich, dass der Schleifkopf mit der Schleifscheibe über mehrere elektrische Stellantriebe verstellbar ist, um den Schleifkopf aus einer Ausgangsposition in die korrekte Schleifposition zum Schleifen des jeweiligen Sägezahnes des Bandsägeblattes zu bringen. Darüber hinaus ist es erforderlich, dass über einen weiteren Stellantrieb eine Vorschubeinheit betätigbar ist, um das Bandsägeblatt nach dem Schleifen eines Sägezahnes um eine Sägezahnposition vorzuschieben, damit der nächste Sägezahn des Bandsägeblattes geschliffen werden kann.

Der vorliegenden Erfindung liegt die Aufgabe zugrunde, eine Profilschleifmaschine und ein Verfahren zum Schleifen eines Bandsägeblattes vorzuschlagen, bei denen besonders kostengünstig und einfach ein Vorschub des Bandsägeblattes realisiert wird.

Diese Aufgabe wird erfindungsgemäß durch die Merkmale des Patentanspruches 1 bzw. 8 bzw. 9 gelöst. Vorteilhafte und beanspruchte Weiterbildungen ergeben sich aus den Unteransprüchen und der Beschreibung sowie den Zeichnungen.

Somit wird eine Profilschleifmaschine mit einem an einem Gehäuserahmen verstellbar gelagerten Schleifkopf mit einer rotierenden Schleifscheibe zum Schleifen eines eingespannten Bandsägeblattes vorgeschlagen. Um mit der vorgeschlagenen Profilschleifmaschine kostengünstig und einfach den Vorschub des Bandsägeblattes zu realisieren, ist vorgesehen, dass der Schleifkopf derart mit einem Vorschubelement in Wirkverbindung steht, dass eine Bewegung des Schleifkopfes in Vorschubrichtung des Bandsägeblattes zum Vorschub des Bandsägeblattes vorgesehen bzw. nutzbar ist.

Die vorgeschlagene Profilschleifmaschine nutzt demnach in vorteilhafter Weise die Bewegbarkeit des Schleifkopfes in beide Längsrichtungen des Bandsägeblattes aus, um das Bandsägeblatt in eine der Längsrichtungen, nämlich in die Vorschubrichtung des Bandsägeblattes mitzubewegen. Auf diese Weise kann ein bei bekannten Profilschleifmaschinen zusätzlich notwendiger Stellantrieb zum Bewegen einer Vorschubeinheit eingespart werden. Zudem kann auch auf die konstruktiv aufwendig gestaltete Vorschubeinheit verzichtet werden, da der Vorschub durch das konstruktiv einfach gestaltete Vorschubelement realisiert wird. Demnach werden nicht nur Kosten gespart, sondern zudem der konstruktive Aufbau der Profilmaschine deutlich vereinfacht.

Eine bevorzugte Ausführung der Erfindung sieht vor, dass der Schleifkopf und das zum Beispiel fingerartige Vorschubelement über einen am Gehäuserahmen geführten ersten Verstellschlitten oder dergleichen zur Längsverstellung bewegbar gelagert sind. Auf diese Weise wird eine Bewegung des Verstellschlittens und des mitbewegten Vorschubelements auf das Bandsägeblatt zum Vorschub desselben genutzt.

Beispielsweise kann das Vorschubelement z. B. als Vorschubfinger oder dergleichen konstruktiv einfach über eine Halterung oder dergleichen an dem ersten Verstellschlitten befestigt werden. Durch die entsprechende Ausführung der Halterung kann eine geeignete Positionierung des Vorschubelements in unmittelbarer Nähe des zu bewegenden Bandsägeblattes einfach und kostengünstig realisiert werden.

Eine besonders einfache und kostengünstige Ausführung wird bei der vorgeschlagenen Profilmaschine dadurch erreicht, dass das Vorschubelement derart um eine Schwenkachse schwenkbar an der Halterung angeordnet ist, dass das Vorschubelement in einer ausgeschwenkten Position mit dem Bandsägeblatt zum Vorschub in Eingriff steht. Demzufolge kann durch einfaches Ausschenken des Vorschubelements eine Verbindung zwischen dem den Schleifkopf bewegenden Verstellschlitten und dem Bandsägeblatt über das Vorschubelement realisiert werden, um durch die Bewegung des Verstellschlittens das Bandsägeblatt zum Positionieren des nächsten zu schleifenden Sägezahnes vorzuschieben. Sobald das Vorschubelement wieder eingeschwenkt wird, ist die Verbindung zu dem Bandsägeblatt wieder gelöst, sodass der Verstellschlitten mit dem Schleifkopf frei bewegt werden kann, ohne dass Bandsägeblatt unerwünscht mitzubewegen. Die Wirkverbindung zwischen dem den Schleifkopf tragenden Verstellschlitten und dem Bandsägeblatt kann über das Vorschubelement so lange aufrechterhalten, bis ein gewünschter Vorschub des Bandsägeblattes erreicht ist. Vorzugsweise wird das Bandsägeblatt um zumindest eine Sägezahnposition vorgeschoben. Das Vorschubelement kann vorzugsweise zum Schwenken pneumatisch angesteuert werden. Es sind jedoch auch andere Betätigungsmöglichkeiten denkbar.

Vorzugsweise kann der erste Verstellschlitten über einen zugeordneten elektrischen Stellantrieb oder dergleichen in Längsrichtungen und damit auch in Vorschubrichtung des Bandsägeblattes bewegt werden.

Besonders vorteilhaft ist es bei der vorgeschlagenen Profilschleifmaschine, dass der Schleifkopf zum Höhenverstellen über einen zweiten Verstellschlitten oder dergleichen an dem ersten Verstellschlitten gelagert ist. Auf diese Weise ist bei der vorgeschlagenen Profilschleifmaschine konstruktiv einfach und kostengünstig möglich, den Schleifkopf zweidimensional sowohl in X-Achsenrichtung, also in Längsrichtung des Bandsägeblattes als auch in Y-Achsenrichtung, also zur Höhenverstellung des Schleifkopfes zu bewegen, um den Schleifkopf mit seiner Schleifscheibe aus einer Ausgangsposition in eine korrekte Schleifposition zu bewegen.

Um einen korrekten Schleifwinkel der Schleifscheibe mit dem Schleifkopf einzustellen, ist vorgesehen, dass der Schleifkopf an dem zweiten Verstellschlitten schwenkbar gelagert ist.

Die der Erfindung zugrunde liegende Aufgabe wird durch ein Verfahren zum Schleifen eines Bandsägeblattes gelöst, bei dem Sägezähne des Bandsägeblattes nacheinander durch den Schleifkopf der vorbeschriebenen Profilschleifmaschine geschliffen werden. Hierbei ergeben sich die bereits beschriebenen und weitere Vorteile.

Die der Erfindung zugrunde liegende Aufgabe wird auch durch ein Verfahren zum Schleifen eines Bandsägeblattes gelöst, bei dem Sägezähne eines Bandsägeblattes nacheinander durch eine Schleifscheibe eines Schleifkopfes einer Profilschleifmaschine geschliffen werden, wobei zum besonders einfachen und kostengünstigen Vorschieben des Bandsägeblattes vorgesehen ist, dass das Bandsägeblatt durch eine Bewegung des Schleifkopfes in Vorschubrichtung zum Positionieren eines nächsten zu schleifenden Sägezahnes vorgeschoben wird. Auf diese Weise ergeben sich die bereits beschriebenen und weitere Vorteile.

Beispielsweise kann im Rahmen des vorgeschlagenen Verfahrens vorgesehen sein, dass der Schleifkopf nach dem Schleifen eines Sägezahnes in eine Ausgangsposition bewegt wird, und dass das Bandsägeblatt durch den sich in Vorschubrichtung des Bandsägeblattes bewegenden Schleifkopf um zumindest eine Sägezahnposition vorgeschoben wird.

Bei dem vorgeschlagenen Verfahren kann vorgesehen sein, dass die Bewegung des Schleifkopfes in Vorschubrichtung des Bandsägeblattes auf ein mit dem Bandsägeblatt in Eingriff bringbares Vorschubelement übertragen wird, sodass das Bandsägeblatt um zumindest eine Sägezahnposition vorgeschoben wird.

Nachfolgend wird die vorliegende Erfindung anhand der Zeichnungen weiter erläutert.

Es zeigen:
- Figur 1: eine schematische Ansicht einer erfindungsgemäßen Profilschleifmaschine zum Schleifen eines Bandsägeblattes; und
- Figur 2: eine schematische Detailansicht der Profilschleifmaschine.

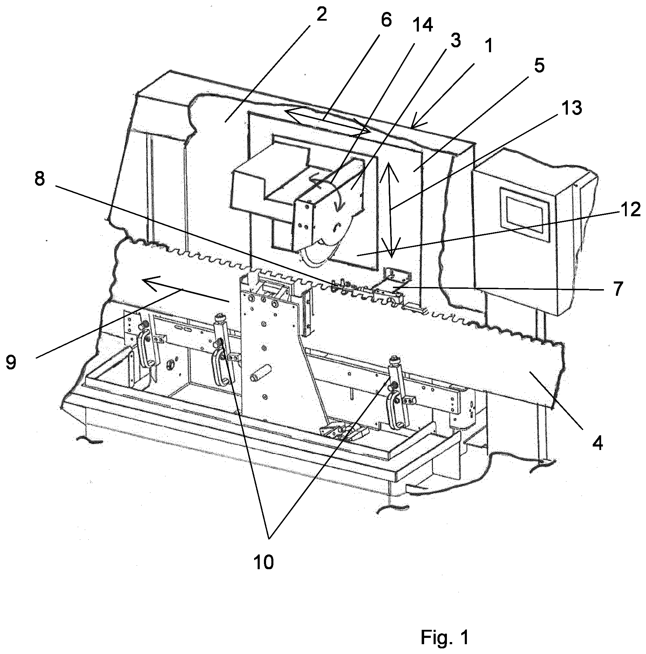

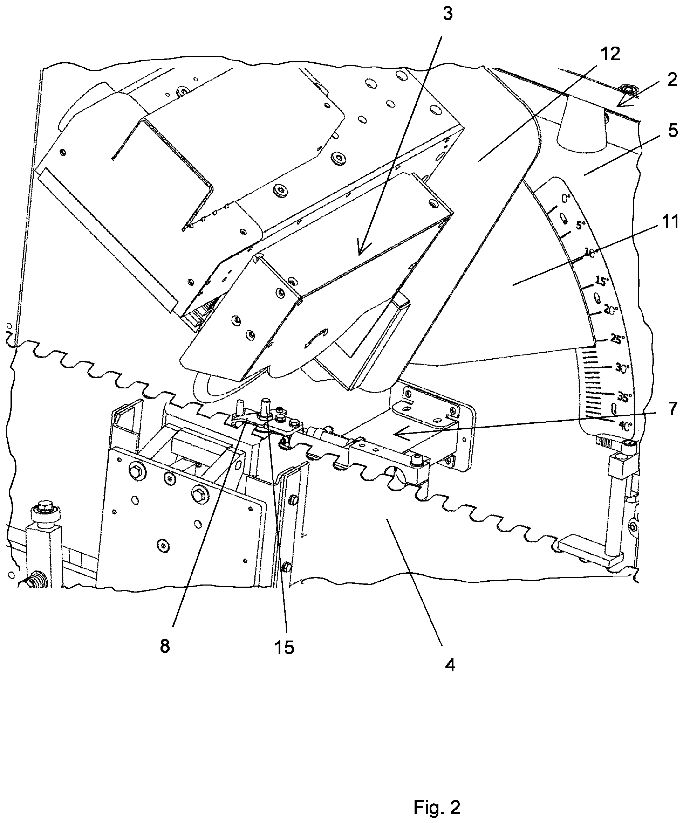

In den Figuren 1 und 2 sind verschiedene Ansichten einer erfindungsgemäßen Profilschleifmaschine 1 mit einer rotierenden Schleifscheibe zum Schleifen eines Bandsägeblattes 4 dargestellt. Anhand der Figuren wird auch ein erfindungsgemäßes Verfahren zum Schleifen des Bandsägeblattes 4 beschrieben.

Die Profilschleifmaschine 1 umfasst einen Gehäuserahmen 2 an dem der verstellbare Schleifkopf 3 zum Schleifen eines eingespannten Bandsägeblattes 4 gelagert ist. Zum Einspannen des Bandsägeblattes 4 ist eine Spanneinrichtung 10 vorgesehen, sodass das Bandsägeblatt 4 in einer Führung um den Gehäuserahmen 2 zum Schleifen der Sägezähne bewegt werden kann.

Der Schleifkopf 3 ist über einen ersten Verstellschlitten 5 in beide Längsrichtungen zur Längsverstellung bewegbar an dem Gehäuserahmen 2 gelagert, wobei die beiden Längsrichtungen durch einen Doppelpfeil 6 in Figur 1 gekennzeichnet sind. Der erste Verstellschlitten 5 ist über entsprechende Führung an den Gehäuserahmen 2 bewegbar gelagert. An dem Schleifkopf 3 bzw. an dem ersten Verstellschlitten 5 ist über eine Halterung 7 ein schwenkbares fingerartiges Vorschubelement 8 derart angeordnet, dass eine Bewegung des den Schleifkopf 3 tragenden Verstellschlittens 5 zum Vorschub des Bandsägeblattes 4 genutzt werden kann, wobei die Halterung 7 an dem den Schleifkopf 3 tragenden ersten Verstellschlitten 5 vorzugsweise mittels Schrauben befestigt ist.

Figur 2 zeigt eine vergrößerte Ansicht der Profilschleifmaschine 1, bei der der Schleifkopf 3 geneigt ist. Das Vorschubelement 8 ist derart um eine Schwenkachse 15 schwenkbar an der Halterung 7 befestigt, dass das Vorschubelement 8 in einer ausgeschwenkten Position mit dem Bandsägeblatt 4 in Eingriff steht. In dieser ausgeschwenkten Position des Vorschubelements 8 wird das Bandsägeblatt 4 durch eine Bewegung des Verstellschlittens 5 in Vorschubrichtung vorgeschoben. Das Schwenken des Vorschubelements 8 wird pneumatisch angesteuert.

Die Vorschubrichtung ist durch einen Pfeil 9 in Figur 1 angedeutet, wobei der Pfeil 9 und der Doppelpfeil 6 parallel zueinander ausgerichtet sind. Demzufolge entspricht eine Bewegung des ersten Verstellschlittens 5 in eine der Längsrichtungen einer Bewegung in die Vorschubrichtung des Bandsägeblattes 4.

Der erste Verstellschlitten 5 ist an der Rückseite des Gehäuserahmens 2 der Profilschleifmaschine 1 mit einem nicht weiter dargestellten elektrischen Stellantrieb zum automatischen Bewegen des Schleifkopfes 3 gekoppelt.

Um auch eine Höhenverstellung des Schleifkopfes 3 zu gewährleisten, ist der Schleifkopf 3 über einen zweiten Verstellschlitten 12 an dem ersten Verstellschlitten 5 bewegbar gelagert. Hierzu sind entsprechende Führungen an dem ersten Verstellschlitten 5 vorgesehen, um den zweiten Verstellschlitten 12 relativ zum ersten Verstellschlitten 5 zur Höhenverstellung bewegen zu können.

Die Höhenverstellung des Schleifkopfes 3 über den zweiten Verstellschlitten 12 ist durch einen Doppelpfeil 13 in Figur 1 angedeutet. Auf diese Weise ist der Schleifkopf 3 zum Einstellen einer korrekten Schleifposition der Schleifscheibe sowohl in Längsrichtung gemäß Doppelpfeil 6 als auch in Höhenrichtung gemäß Doppelpfeil 13 verstellbar. Auch der zweite Verstellschlitten 12 wird über einen an der Rückseite des Gehäuserahmens 2 der Profilschleifmaschine 1 angeordneten nicht weiter dargestellten elektrischen Stellantrieb betätigt.

Um auch einen gewünschten Schleifwinkel der Schleifscheibe bei dem Schleifkopf 3 einstellen zu können, ist der Schleifkopf 3 schwenkbar an dem zweiten Verstellschlitten 12 über eine Einstelleinrichtung 11 gelagert. Die Schwenkbewegung ist durch einen Doppelpfeil 14 in Figur 1 angedeutet.

Bei dem vorgeschlagenen Verfahren zum Schleifen des Bandsägeblattes 4 werden die Sägezähne des Bandsägeblattes 4 nacheinander durch die Schleifscheibe des Schleifkopfes 3 der Profilschleifmaschine 1 geschliffen, wobei das Bandsägeblatt 4 durch die Bewegung des Schleifkopfes 3 in Vorschubrichtung vorgeschoben wird. Die Bewegung des Schleifkopfes 3 wird so lange über das Vorschubelement 8 auf das Bandsägeblatt 4 übertragen, bis das Bandsägeblatt 4 um zumindest eine Sägezahnposition vorgeschoben worden ist. Anschließend wird das Vorschubelement 8 wieder eingeschwenkt. Danach wird der Verstellschlitten mit dem Schleifkopf 3 in die korrekte Schleifposition zum Schleifen des nächsten zu schleifenden Sägezahnes des Bandsägeblattes 4 bewegt. Nach dem Schleifen des Sägezahnes wird das Vorschubelement 8 wieder ausgeschenkt, sodass dieser mit dem Bandsägeblatt 4 in Eingriff steht und der Vorschub des Bandsägeblattes 4 über die Bewegung des ersten Verstellschlittens 5 erfolgen kann, um die nächste Sägezahnposition zu erreichen.

### Bezugszeichen

- 1: Profilschleifmaschine
- 2: Gehäuserahmen
- 3: Schleifkopf
- 4: Bandsägeblatt
- 5: Verstellschlitten
- 6: Doppelpfeil für Längsverstellung
- 7: Halterung für das Vorschubelement
- 8: schwenkbares Vorschubelement
- 9: Pfeil für Vorschubrichtung
- 10: Spanneinrichtung für das Bandsägeblatt
- 11: Winkel-Einstelleinrichtung
- 12: zweiter Verstellschlitten
- 13: Doppelpfeil für Höhenverstellung
- 14: Doppelpfeil für Schwenkbewegung
- 15: Schwenkachse des Vorschubelements

## Patentansprüche

1. Profilschleifmaschine (1) mit einem an einem Gehäuserahmen (2) verstellbar gelagerten Schleifkopf (3) mit einer rotierenden Schleifscheibe zum Schleifen eines eingespannten Bandsägeblattes (4), **dadurch gekennzeichnet, dass** der Schleifkopf (3) derart mit einem Vorschubelement (8) in Wirkverbindung steht, dass eine Bewegung des Schleifkopfes (3) in Vorschubrichtung zum Vorschub des Bandsägeblattes (4) vorgesehen ist.

2. Profilschleifmaschine (1) nach Anspruch 1, **dadurch gekennzeichnet, dass** der Schleifkopf (3) und das Vorschubelement (8) über einen am Gehäuserahmen (2) geführten ersten Verstellschlitten (5) bewegbar gelagert sind.

3. Profilschleifmaschine (1) nach Anspruch 2, **dadurch gekennzeichnet, dass** das Vorschubelement (8) über eine Halterung (7) an dem ersten Verstellschlitten (5) befestigt ist.

4. Profilschleifmaschine (1) nach einem der vorangehenden Ansprüche, **dadurch gekennzeichnet, dass** das Vorschubelement (8) derart schwenkbar an der Halterung (7) angeordnet ist, dass das Vorschubelement (8) in einer ausgeschwenkten Position mit dem Bandsägeblatt (4) zum Vorschub in Eingriff steht.

5. Profilschleifmaschine (1) nach einem der Ansprüche 2 bis 4, **dadurch gekennzeichnet, dass** der erste Verstellschlitten (5) über einen elektrischen Stellantrieb in Längsrichtungen des Bandsägeblattes (4) bewegbar ist.

6. Profilschleifmaschine (1) nach einem der Ansprüche 2 bis 5, **dadurch gekennzeichnet, dass** der Schleifkopf (3) zum Höhenverstellen über einen zweiten Verstellschlitten (12) an dem ersten Verstellschlitten (5) gelagert ist.

7. Profilschleifmaschine (1) nach Anspruch 6, **dadurch gekennzeichnet, dass** der Schleifkopf (3) an dem zweiten Verstellschlitten (12) schwenkbar gelagert ist.

8. Verfahren zum Schleifen eines Bandsägeblattes (4), bei dem Sägezähne des Bandsägeblattes (4) nacheinander durch einen Schleifkopf (3) einer Profilschleifmaschine (1) nach einem der vorangehenden Ansprüche geschliffen werden.

9. Verfahren zum Schleifen eines Bandsägeblattes (4), bei dem Sägezähne des Bandsägeblattes (4) nacheinander durch einen Schleifkopf (3) einer Profilschleifmaschine (1) geschliffen werden, **dadurch gekennzeichnet, dass** das Bandsägeblatt (4) durch eine Bewegung des Schleifkopfes (3) in Vorschubrichtung zum Positionieren eines nächsten zu schleifenden Sägezahnes vorgeschoben wird.

10. Verfahren nach Anspruch 9, **dadurch gekennzeichnet, dass** der Schleifkopf (3) nach dem Schleifen eines Sägezahnes in eine Ausgangsposition bewegt wird, und dass das Bandsägeblatt (4) durch den sich in Vorschubrichtung des Bandsägeblattes (4) bewegenden Schleifkopf (3) um zumindest eine Sägezahnposition vorgeschoben wird.

11. Verfahren nach Anspruch 9 oder 10, **dadurch gekennzeichnet, dass** die Bewegung des Schleifkopfes (3) in Vorschubrichtung des Bandsägeblattes (4) auf ein mit dem Bandsägeblatt (4) in Eingriff bringbares Vorschubelement (8) übertragen wird, sodass das Bandsägeblatt (4) um zumindest eine Sägezahnposition vorgeschoben wird.
